(19) Europäisches Patentamt
European Patent Office
Office européen des brevets

(11) Publication number: 0 002 269 A1

(12) # EUROPEAN PATENT APPLICATION

(21) Application number: 78101506.0

(22) Date of filing: 01.12.78

(51) Int. Cl.[2]: C 09 K 15/30
C 10 M 1/34, C 10 M 3/28
C 07 D 251/70, C 07 C 87/50

(30) Priority: 02.12.77 US 856875

(43) Date of publication of application: 13.06.79 Bulletin 79/12

(84) Designated contracting states: BE DE FR GB NL SE

(71) Applicant: The B.F. GOODRICH Company
Dept. 0015 WHB-6 500 South Main Street
Akron, Ohio 44318(US)

(72) Inventor: Lai, John Ta-Yuan
663 Tollis Park
Broadview Heights Ohio 44147(US)

(74) Representative: Baillie, Iain Cameron et al,
c/o Ladas, Parry, von Gehr, Goldsmith & Deschamps
Blumenstrasse 48
D-8000 München 2(DE)

(54) **Composition and use of this composition as a stabilizer in lubricating oils, and product obtained.**

(57) An antioxidant composition comprising at least one diaromatic amine compound of the formula

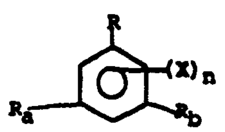

I

wherein R, $R_a$ and $R_c$ are independently selected from the group consisting of hydrogen and 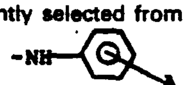

A is alkyl of 1-12 carbon atoms, haloalkyl, aralkyl, mercapto or alkylmercapto; X is alkyl of 1-12 carbon atoms; and n is 0 or 1

with the priviso that where R, $R_a$ and $R_b$ are 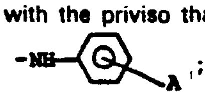; n is 0, or that where only R is 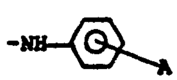 n is 1; and

at least one substituted melamine compound of the formula

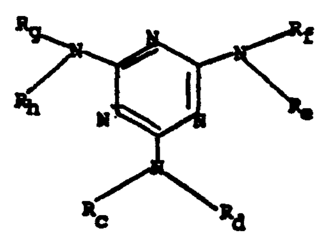

wherein $R_c$ through $R_h$ are independently selected from the group consisting of hydrogen, alkyl, substituted alkyl, cycloalkyl, aryl and substituted aryl.

The relative weight ratio of formula I to formula II compounds in the composition of this invention can range from about 1:10 to about 10:1. The above compositions are highly effective stabilizers for synthetic lubricants.

EP 0 002 269 A1

TITLE MODIFIED
0002269 see front page



# ANTIOXIDANT COMPOSITION SUITABLE IN SYNTHETIC LUBRICANTS

## BACKGROUND OF THE INVENTION

Field of the Invention - This invention is directed to compositions and a method. More specifically this invention involves synergistic combinations of ingredients suitable for use as antioxidants in the stabilization of snythetic lubricants; and, to methods for the stabilization of such lubricants.

Description of the Prior Art - The current trend in automobile engine design has resulted in a substantial increase in engine operating temperatures. This factor, together with longer recommended intervals between oil changes, has placed even greater demands upon the lubricants used in the engine operating enviornments. Moreover, the increasing utilization of diesel-powered vehicles, and their concomitant higher operating temperatures, has further accelerated the need for development of more long-lived lubricants.

Various types of lubricants have been formulated to meet the increasingly demanding lubrication requirements of the engines referred to hereinabove. Many of these lubricants are synthetic products, thereby permitting more uniformity in control over their respective properties. Even these synthesized motor oils do, however, require the addition of certain additives to complement their intrinsic properties. A variety of additive packages are available for use in conjunction with such synthetic lubricants to extend their stability under the demanding operating conditions contemplated for their application. These additives are intended to enhance the synthetic oil's resistance to oxidation and to improve its thermal stability. Additives are also available to neutralize the corrosive by-products of combustion, thereby preventing deterioration of metallic parts in contact with such corrosive agents and thus ensuring the maintenance of engine tolerances. The breakdown of a lubricant during severe operating conditions by one or more of the above degradative forces can also dramatically increase the lubricant's viscosity. An increase in the

viscosity of a lubricant can result in restricted flow to bearings, inadequate lubrication upon starting and/or inadequate cooling during engine operation.

It is therefore apparent, that in order to achieve efficient engine operation and extended periods between oil changes, the lubricants used in modern engines must initially meet very strict and demanding requirements, and be able to retain their original characteristics (or characteristics as near their original characteristics as possible) during their prolonged residence within the engine crackcase.

Synthetic lubricants are currently available in today's market which purportedly satisfy the above stated conditions. Two such products are available from R.T. Vanderbilt Company, New York City, New York, under the trade name Vanlube 81 and Vanlube 82. These synthetic lubricants contain in addition to a synthesized base lubricating oil, an antioxidant composition comprising a diaromatic amine (4,4'-di-octyl-di-phenylamine) and PBNA (N-phenyl-2-napthylamine). The cost of PBNA has risen substantially since its first introduction as a lubricant additive. Moreover, expressed concerns about PBNA as a potential carcinogen have prompted efforts in search for a substitute.

Synthetic lubricants containing antioxidant compositions which are devoid of PBNA have been reported in the patent literature; see UK Patent 1,358,045. The antioxidant composition described in '045 patent comprises a mixture containing a diamine of the formula.

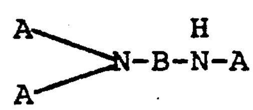

wherein A is a benzene nucleus substituted in the para position with a tertiary alkyl group having 4 to 9 carbon atoms, and B is benzene nucleus which is substituted in the para position (with respect to the nitrogen groups) with a tertiary alkyl group having 4 to 9 carbon atoms, and an s-triazine compound of the formula

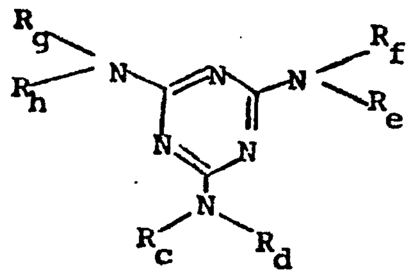

wherein the R groups are hydrogen atoms or alkyl or aryl groups containing up to 20 carbon atoms per group with the provisos that at least one R group is a hydrogen atom and at least one R group is an alkyl or aryl group.

One of the diamine compounds of the above formula, which is preferred by patentee, is derived from 4,4'-di-t-octyldiphenylamine. The s-triazine component of the above antioxidant composition must, for some undisclosed reason, have at least one unsubstituted hydrogen on one of the peripheral amino moieties and at least one R substituent on a peripheral amino moiety must comprise an alkyl or aryl substituent. Patentee also discloses that the s-triazines of his antioxidant composition can include mono-substituted melamines.

As is apparent from the above discussion, the need for lubricants having enhanced stability to oxidative and thermal degradation is increasing. The lubricants of today and those needed in the future, must be capable of retaining their original functional attributes between extended oil changes and, in addition, be more efficient in maintaining particulates in suspension and the neutralization of deleterious substances (e.g. corrosive agents such as acids) generated during the combustion process. The way for achieving these objectives is believed to lie in the formulation of synthetic lubricants and the stabilization thereof with additive packages which are both relatively inexpensive to manufacture and innocuous to the environment. Moreover, the ability to realize such goals is dependent, at least in part, upon the development of additive combinations which tend to complement and/or supplement each other, thereby reducing the

overall concentration and cost of additives in the synthetic lubricants.

SUMMARY OF THE INVENTION

Accordingly, it is the object of this invention to remedy the above, as well as related deficiencies in the prior art.

More specifically, it is the principle object of this invention to provide an additive package for use in lubricants which is effective for the enhancement of the lubricants' resistance to oxidative degradation.

It is yet another object of this invention to provide an additive package for use in lubricants which is effective for the enhancement of the lubricants' resistance to thermal degradation.

Still yet a further object of this invention is to provide a composition containing a base lubricating oil which has been effectively stabilized against the degradative forces of oxidation.

An additional object of this invention is to provide a composition containing a base lubricating oil which has been effectively stabilized against the degradative effects of high operating temperatures.

Further objects of this invention include providing methods for extending the useful life of lubricants against the degradative forces of oxidation and high temperature.

The above and related objects are achieved by providing a composition comprising at least one diaromatic amine compound of the formula

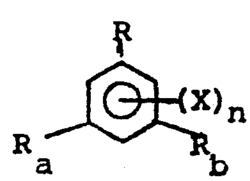

I

wherein R , R and R are independently selected from the group consisting of hydrogen and

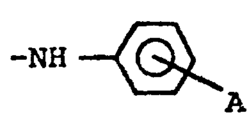

; A is alkyl of 1 - 12 carbon atoms ;

haloalkyl, aralkyl, mercapto or alkylmercapto; X is alkyl of 1 - 12 carbon atoms; and n is 0 or 1

with the proviso that where R , $R_a$ and $R_b$ are 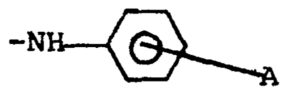 , n is 0, or that where only R is

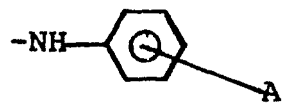 n is 1; and

at least one substituted melamine compound of the formula

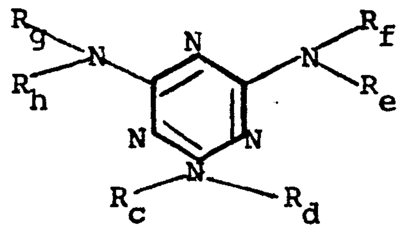 (II)

wherein $R_c$ through $R_h$ are independently selected from the group consisting of hydrogen, alkyl, substituted alkyl, cycloalkyl, aryl, and substituted aryl.

The relative weight ratio of formula I to formula II compounds in the composition can range from about 10:1 to about 1:10. The above compositions are effective for the stabilization of base lubricating oils against oxidation and high temperature degradation.

## DESCRIPTION OF THE INVENTION INCLUDING PREFERRED EMBODIMENTS

The compositions of this invention can be prepared from the aforementioned ingredients by simply physically combining said ingredients either in the presence of or prior to their addition to a base lubricating oil.

The diaromatic amines suitable for use in the compositions of this invention can be readily prepared by techniques disclosed in the open literature; see, for example, the article by N.P. Buu-Hoi, appearing in J. Chem. Soc. 4346 (1952). The Knoevenagl synthesis for the preparation of aromatic secondary amines (discussed in the foregoing articles simply involves the iodine-catalyzed condensation of hydroxy-compounds with aromatic amines. The article by Buu-Hoi, appearing in the above journal, extends this well known technique (as regards the phenolic component), to several polyhydric benzene and naphthalene derivatives and to 6-bromo-2-naphthol; and, (as regards the amino component), to a series of substituted anilines and to 2-aminopyridine. The preferred diaromatic amines which are suitable for use in the compositions of this invention include tris-(m-trifluoro-methylanilino)-benzene and p,p'-dioctyl-diphenylamine.

The substituted melamines suitable for use in the compositions of this invention can also be readily prepared by techniques described in the open literature; see, for example, the article by D.W. Kaiser, et al, appearing in J.Am.Chem.Soc. 73:2984 (1951). The above article describes the reaction of chlorotriazines with amines in an aqueous medium for the preparation of substituted melamines. Such preparation enables the synthesis of substituted melamines at acceptable yields. The substituted melamines which are preferred for use in the compositions of this invention include hexamethyl melamine, hexaethyl melamine, tris-2,4,6-piperidino-1,3,5-triazine, 2-(o-p-tolythio-anilino)-4,6-bis-piperidino-1,3,5-triazine, 2,4,6-tris-(2,4-dimethyl-anilino)-1,3,5-triazine, 2,4-bis-piperidino-6-anilino-1,3,5-triazine,2,4-bis-piperidino-6-(thizaole-2-amino)-1,3,5-triazine, 2,4,6-trimorpholino-1,3,5-triazine, 2,4,6-trianilino-1,3,5-triazine, and 2,4-diisopropylamino-6-piperidino-1,3,5-triazine.

As indicated hereinabove, the composition prepared from the diaromatic amine and substituted mealmine can be used to effectively extend the life of lubricants. Such lubricants will contain, in addition to the diaromatic amine and substituted melamines, a base lubricating oil, which may be of mineral or synthetic origin. The stabilizing composition prepared from the diaromatic amine and substituted melamine can be present in any amount sufficient to effect stabilization of the base lubricating oil from the degradative forces encountered in the environment of its contemplated use. Ordinarily, the stabilizing composition will be present in the base lubricating oil at a concentration not to exceed about 10% by weight, and preferably, in the range of from about 0.1 to about 6% weight.

The effect of the stabilizer composition is demonstrated to maximum advantage when used in combination with a thermally stable liquid neutral polyester basestock, preferably at a concentration of from about 2 to about 4% by weight. Such polyesters can be prepared by reacting, under esterification conditions, and in one or more stages, (i) an aliphatic mono-and/or polyhydric alcohol having 5 to 15 and preferably from 5 to 10 carbon atoms and having no hydrogen atoms attached to any carbon atom in the 2 position with respect to any hydroxyl group, and (ii) an aliphatic mono- and/or polycarboxylic acid having 2 to 14, and preferably 3 to 12,carbon atoms per molecule.

The term "polyester" is intended to describe an ester having at least two ester linkages per molecule; therefore, including diesters such as neophentyl glycol dipelargonate and di)2,2,4-trimethyl-pentol) sebacate. The term "neutral" is used in combination with the above term to describe a fully esterified product.

It is further understood that in the esterification reaction described hereinabove, ther may be additional reactants present other than those specifically referred to, (e.g. a mixture of monocarboxylic acids and, in any case, the neutral ester product of the esterification reaction will sometimes consist of

a mixture of different esters, so that the expression "polyester" is to be construed in this light).

Representative of suitable acids and alcohols that may be used in the preparation of such polyesters include caprylic acid, capric acid, caproic acid, enanthic acid, pelargonic acid, valeric acid, pivalic acid, propionic acide, butyric acid, 2-ethylhexanoic acid, adipic acid, sebacic acid, and azelaic acid. Alcohols which can be esterified with the above acids include 2,2,4-trimethylpentanol, neopentyl alcohol, neopentyl glycol, trimethyl-olethane, trimethylol propane, pentaerythritol and dipentaerythritol. The above acids and alcohols can be formed into polyesters by reacting any one of the above acids with any one of the above alcohols under the appropriate conditions.

The preferred polyester basestock suitable for use in the composition of this invention are esters of trimethylol propane, trimethylol ethane, pentaerythritol and/or dipentaerythritol with one or more monocarboxylic acids having 3 to 10 carbon atoms, (particularly one or more of those mentioned in the preceding paragraph). More complex polyesters, for example, those prepared from trimethylol propane, sebacic and/or azelaic acid, and one or more monocarboxylic acids having 3 to 10 carbon atoms, (particularly one or more of those mentioned in the preceding paragraph), are also especially preferred for use in the lubricant compositions of this invention. The most preferred of the polyesters suitable for use in the compositions of this invention are those prepared from trimethylol propane and dicarboxylic acids wherein the alcohol/acid mole ratio is in the range of from about 1:0.05 to about 1:0.75, and most preferably from about 1:0.075 to about 1:0.4; the amount of carboxylic acid being sufficient to provide an adequate carboxyl/hydroxyl balance among the reactants present.

As indicated hereinabove, the ingredients pre-

ent in the stabilizer composition can be preblended or combined by direct incorporation into the base lubricating oil. The efficacy of the stabilization additive package in the base lubricating oil is evaluated according to a modified Federal Test Method Standard Number 791a, Method 5308.5 (July 27, 1964). The test involves a high temperature (420°F) oxidation test performed in the presence of air and 5 different metals; e.g., copper, silver, magnesium, aluminum and steel. The test fluid di(2-ethylhexyl) sebacate, (available as Herculube A, from Hercules Chemical Company, Wilmington, Delaware), containing the desired additives, is placed in a large test tube equipped with an air bubbler a sample holder for the metals and a condenser. The assembled test tube is placed in a heated block and the temperature increased to the previously stated level. Air is then bubbled through the fluid at a rate of about 5 liters per hour over a 72 hour interval. At the end of such tests, the sample is evaluated by: (a) visual examination for sludge formation; (b) percent change in the viscosity of the test fluid; (c) change in the acid number of the test fluid; (d) change in weight of the metals; and (e) percent loss in the weight of the test fluid. The relative success or failure of a stabilized lubricating oil is based upon comparative data for a control sample of oil containing 0.75 parts per hundred of N-phenyl-2-naphthylamine (hereinbefore referred to as PBNA) and 0.75 parts per hundred p,p'-dioctyl diphenylamine (commercially available as Stalite-S, available from The BFGoodrichCompany, Akron, Ohio).

## EXAMPLES

The Examples which follow further illustrate the preparation and evaluation of a number of the preferred compositions of this invention.

The apparatus and techniques used in both the preparation and evaluation of the compositions of this invention are standard or as hereinbefore described.

Parts and percentages appearing in such Examples are by weight unless otherwise indicated.

EXAMPLE I

SYNTHESIS OF SUBSTITUTED MELAMINE

1. Preparation of hexamethylmelamine (HMM): about 37 grams cyanuric chloride (0.2 moles - available from Aldrich Chemical Company) and 30 milliliters water were placed in a one liter 3 neck flask equipped with a mechanical stirrer, thermometer and pressure equalized addition funnel. About 0.162 grams (1.44 moles) dimethylamine (a 40% aqueous solution - available from Aldrich Chemical Company) was added drop-wise at a predetermined rate so as to control the exotherm of the reaction and thereby maintain the reaction temperature below 40°C. After such addition is complete, the mixture was sitrred for one additional hour, warmed to 55°C. overnight, cooled down and filtered. A white crystalline product, thus obtained, was washed thoroughly with water and recrystallized from menthanol therby yielding 32 grams of colorless needles. Another 7.5 grams of crystalline product was recovered by concentrating the mother liquor. Total yield: 39.5 grams (92.7% theoretical yield) m.p. 173-4°C (Lit. 173-40C).

2. Preparation of 2-(o-p-tolylthio-anilino) -4,6-bis-piperidino-1,3,5-triazine: about 18.4 grams cyanuric chloride (0.1 moles) and 100 milliliters acetone were placed in a 3 neck flask equipped with a mechanical stirrer, reflux condenser and pressure equalized addition funnel. A pinch of phenolphthalein was added as an indicator. About 22 grams 2-(p-tolylthio)-aniline (0.1 moles - available from Aldrich Chemical Company) in 20 milliliters acetone was then added, followed by drop-wise addition of a solution of 4 grams sodium hydroxide in 40 milliliters water. The addition rate was controlled so as to make the reaction mixture slightly basic (as indicated by the pink color). After such addition, 20 grams piperidine (0.24 moles) was introduced into the

reaction liquor and the reaction mixture warmed to 65°C. A solution of 8 grams sodium hydroxide in 80 milliliters water was added at a controlled rate so as to maintain a slightly basic reaction medium. The reactants were stirred for an additional hour after the pink color persisted and then allowed to cool down. The resultant product was collected as an off-white solid and washed thoroughly with water. The yield was 44 grams (95.7% theoretical yield). The recovered solids were dried overnight in a vacuum oven (oven temperature 120°F) m.p. 166-167.5°C.

3. Preparation of tris-1,3,5-(m-methylmercapto anilino)-benzene: about 5.5 grams phloroglucinol (0.034 moles), 18.5 grams m-methyl mercaptoaniline (0.136 moles) and 0.2 grams iodine were mixed and heated at 185°C under argon for 3 hours. As the reaction proceeded, the water which was generated was collected. The reactants were cooled down to about 100°C and methanol added. The solid, thus formed, was collected and washed thoroughly in methyl alcohol. The solid was purified by recrystallization from benzene thereby yielding 16 grams of a white solid (96.2% theoretical yield) m.p. 161-3°C.

Each of the above substituted melamines are combined with equal parts by weight of a diaromatic amine and the resulting mixture evaluated for its ability to stabilize synthetic lubricants (in this case di(2-ethylhexyl) sebacate - available from Hercules Chemical Company under the trade name Herculube A). The concentration of each of the components of the stabilization mixture in the oil is approximately 0.75 parts by weight per 100 hundred parts by weight of oil. Benzotriazole was also added to a number of the formulations. The formulations containing benzotriazole are less corrosive than formulations deficient of this agent; as evidenced by significant differences in metal weight loss for copper. The method used in such evaluation is Federal Test Method Standard Number 791a, Method 5308.5

(July 27, 1964). The results of such test are set forth in the table which follows:

| Formulation No. | | PHR | % Viscosity Change | Acid # Change | Sludge | Metal Wt. Loss $(mg/cm^2)$ |
|---|---|---|---|---|---|---|
| 1. | Naugard 445* | 0.75 | 12.9 | 0.11 | None | +0.02 Al<br>-0.26 Cu<br>+0.05 Mg<br>-0.02 Fe<br>0.00 Ag |
| | Hexamethylmelamine | 0.75 | | | | |
| 2. | Naugard 445 | 0.75 | 14.3 | -0.72 | None | +0.03 Al<br>-0.01 Cu<br>+0.10 Mg<br>+0.10 Fe<br>0.00 Ag |
| | Hexamethylmelamine | 0.75 | | | | |
| | Benzotriazole | 0.20 | | | | |
| 3. | Naugard 445 | 0.75 | 14.0 | 0.16 | None | +0.13 Al<br>-0.97 Cu<br>+0.01 Mg<br>+0.02 Fe<br>-0.07 Ag |
| | Hexamethylmelamine | 0.75 | | | | |
| 4. | Naugard 445 | 0.75 | 17.5 | -0.80 | None | 0.00 Al<br>-0.02 Cu<br>+0.04 Mg<br>+0.09 Fe<br>-0.02 Ag |
| | Hexamethylmelamine | 0.75 | | | | |
| | Benzotriazole | 0.20 | | | | |
| 5. | Stalite S | 0.75 | 14.4 | 1.15 | None | +0.02 Al<br>-0.05 Cu<br>+0.03 Mg<br>+0.01 Fe<br>+0.01 Ag |
| | Hexaethylmelamine | 0.75 | | | | |
| | Benzotriazole | 0.20 | | | | |

| Formulation No. | | PHR | % Viscosity Change | Acid # Change | Sludge | Metal Wt. Loss ($mg/cm^2$) |
|---|---|---|---|---|---|---|
| 6. | Naugard 445 | 0.75 | | | | |
| | Tris piperidyl Triazine | 0.75 | 9.3 | 0.05 | Moderate | +0.20 Al<br>-0.14 Cu<br>+0.03 Mg<br>+0.08 Fe<br>+0.05 Ag |
| 7. | Naugard 445 | 0.75 | | | | |
| | Tripiperidyl Triazine | 0.75 | 17.3 | -0.74 | Light | +0.07 Al<br>+0.10 Cu<br>+0.19 Mg<br>+0.08 Fe |
| | Benzotriazole | 0.20 | | | | |
| 8. | Stalite S | 1.50 | 20.7 | 3.26 | None | -0.09 Al<br>-1.49 Cu<br>-0.01 Mg<br>-0.02 Fe<br>-0.03 Ag |
| 9. | Stalite S | 0.75 | 44.0 | 3.0 | None | -0.20 Al<br>-1.20 Cu<br>-1.40 Mg<br>-0.02 Fe<br>-0.07 Ag |
| | PBNA | 0.75 | | | | |

| Formulation No. | | PHR | % Viscosity Change | Acid # Change | Sludge | Metal Wt. Loss ($mg/cm^2$) |
|---|---|---|---|---|---|---|
| 10. | Tris-(m-trifluoromethylanilino)-benzene | 0.75 | 14.0 | 1.1 | None | 0.00 Al<br>-0.61 Cu<br>+0.05 Mg<br>+0.01 Fe<br>-0.18 Ag |
| | Hexamethyl melamine | 0.75 | | | | |

* NAUGARD 445

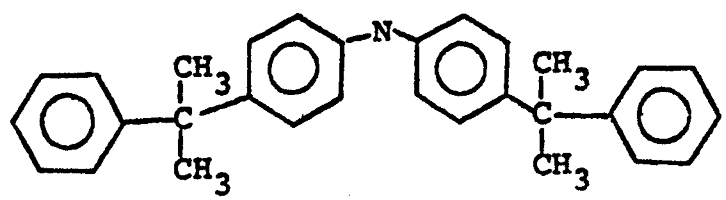

The preceding data appearing in Table I clearly demonstrates the improvement in stabilization of synthetic oils using the stabilizer compositions of this invention. As is apparent from the preceding data, most of stabilizer composition of this invention are superior to the control sample in virtually all of the observed performance criteria.

The foregoing examples are provided as an illustrative of the preferred embodiments of this invention and not intended to delineate the scope thereof, which is set forth in the claims which follow.

CLAIMS

1. A composition comprising at least one diaromatic amine compound of the formula

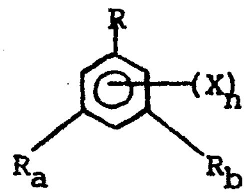

I

wherein R , $R_a$ and $R_b$ are independently selected from the group consisting of hydrogen and

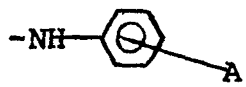

; A is aklyl of 1-12 carbon atoms, haloalkyl, aralkyl, mercapto or alkylmercapto; X is alkyl of 1 - 12 carbon atoms; and n is 0 or 1

with the proviso that where R , $R_a$ and $R_b$ are

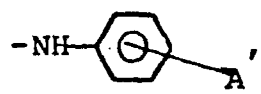

, n is 0, or that where only R is

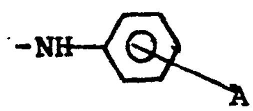

n is 1; and

at least one substituted melamine compound of the formula

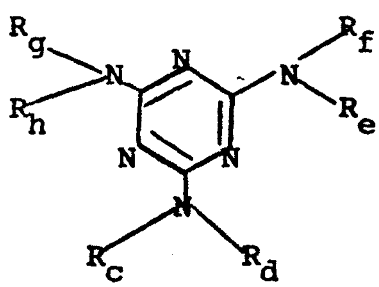

wherein $R_c$ through $R_h$ are independently selected from the group consisting of hydrogen, aklyl, substituted aklyl, cycloalkyl, aryl and substituted aryl;

the relative weight ratio diaromatic amine to substituted melamine compound in said composition being in the range of from about 1:10 to about 10:1.

2. A composition comprising a base lubricating oil and, in an amount effective to extend the useful life of said base lubricating oil, a stabilizer composition containing at least one diaromatic amine compound of the formula

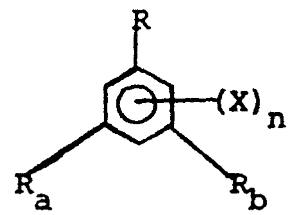 I

wherein R , $R_a$ and $R_b$ are independently selected from the group consisting of hydrogen and

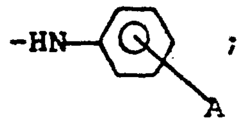 ; A is alkyl of 1-12 carbon atoms, haloaklyl, aralkyl, mercapto or alkylmercapto; X is alkyl of 1 - 12 carbon atoms; and n is 0 to 1

with the proviso that where R , $R_a$ and $R_b$ are

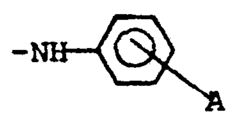 , n is 0, or that where only R is

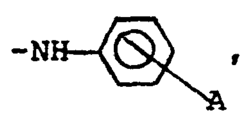 , n is 1; and

at least one substituted melamine compound of the formula

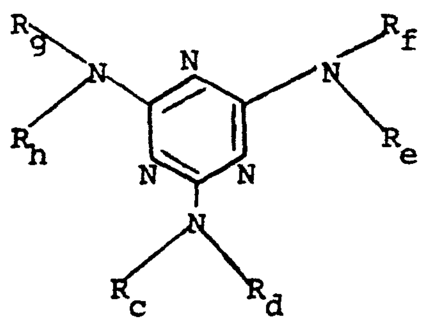

wherein $R_c$ through $R_h$ are independently selected from the group consisting of hydrogen, alkyl substituted alkyl, cycloalkyl, aryl and substituted aryl;

the relative weight ratio of diaromatic amine to substituted melamine compound in said composition being in the range of from about 1:10 to about 10:1.

3. The composition of Claim 2 wherein the stabilizer mixture is present in an amount sufficient to enhance the resistance of said base lubricating oil to oxidative degradation.

4. The composition of Claim 2 wherein the stabilizer mixture is present in an amount sufficient to enhance the resistance of said base lubricating oil to thermal degradation.

5. A method for extending the useful life of a base lubricating oil against the degradative forces of oxidation, said method comprising incorporating within said oil an antioxidant effective amount of a composition comprising at least one diaromatic amine compound of the formula

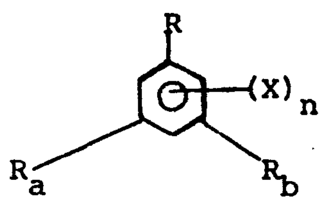

I

wherein R , $R_a$ and $R_b$ are independently selected from the group consisting of hydrogen and

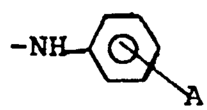 ; A is aklyl of 1 - 12 carbon atoms, haloalkyl, aralkyl, mercapto or alkylmercapto; X is alkyl of 1 - 12 carbon atoms; and n is 0 or 1

with the proviso that where R , $R_a$ and $R_b$ are

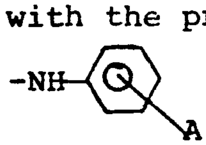 , n is 0, or that where on R is

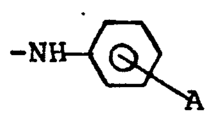 n is 1; and

at least one substituted melamine compound of the formula

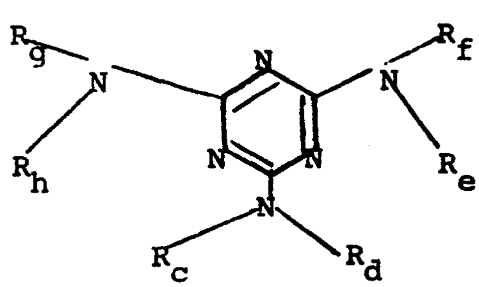

wherein $R_c$ through $R_h$ are independently selected from the group consisting of hydrogen alkyl, substituted alkyl, cycloalkyl, aryl and substituted aryl;

the relative weight ratio of diaromatic amine to substituted melamine compound in said composition being in the range of from about 1:10 to about 10:1.

6. A method for extending the useful life of a base lubricating oil against the degradative forces of thermal degradation, said method comprising incorporating within said oil a heat stabilization effective amount of a composition comprising at least one diaromatic amine compound of the formula

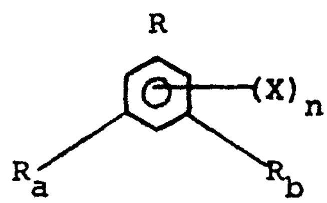 I

wherein R , $R_a$ and $R_b$ are independently selected from the group consisting of hydrogen and

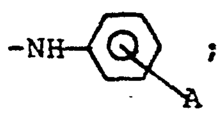 ; A is alkyl of 1 - 12 carbon atoms,

haloalkyl, aralkyl, mercapto or alkylmercapto; X is alkyl of 1 - 12 carbon atoms; and n is 0 or 1

with the proviso that where R , $R_a$ and $R_b$ are

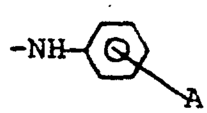 , n is 0, or that where on R is

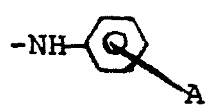 n is 1; and

at least one substituted melamine compound of the formula

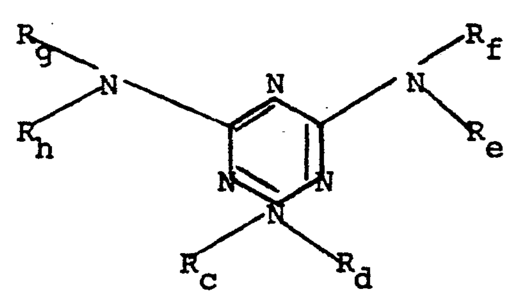

wherein $R_c$ through $R_h$ are independently selected from the group consisting of hydrogen, alkyl, substituted alkyl, cycloalkyl, aryl and substituted aryl;

the relative weight ratio of diaromatic amine to substituted melamine compound in said composition being in the range of from about 1:10 to about 10:11.

0002269

Application number

European Patent Office

# EUROPEAN SEARCH REPORT

EP 78 10 1506

## DOCUMENTS CONSIDERED TO BE RELEVANT

| Category | Citation of document with indication, where appropriate, of relevant passages | Relevant to claim |
|---|---|---|
| X | FR - A - 1 499 018 (SHELL)<br>* Abstracts 1, 2a-u *<br>-- | 1-6 |
| X | US - A - 3 785 977 (P. FLOWERDAY et al.)<br>* Claims 1-4; column 1, line 45 - column 3, line 23; column 5, lines 14-47 and 68-71 *<br>---- | 1-6 |

**CLASSIFICATION OF THE APPLICATION (Int. Cl.²)**

C 09 K 15/30
C 10 M 1/34
3/28
C 07 D 251/70
C 07 C 87/50

**TECHNICAL FIELDS SEARCHED (Int.Cl.²)**

C 09 K 15/30
C 10 M 1/34
3/28

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 14-03-1979 | ROTSAERT |

EPO Form 1503.1 06.78